# EUROPÄISCHE PATENTSCHRIFT

(11) **EP 0 798 706 B1**
(45) Veröffentlichungstag und Bekanntmachung des Hinweises auf die Patenterteilung: **27.08.2003**
(21) Anmeldenummer: 97104472.2
(22) Anmeldetag: 15.03.1997
(51) Int. Cl.: G11B 7/135

(54) **Gerät zum Lesen und/oder Beschreiben optischer Aufzeichnungsträger**
Apparatus for reading from and/or writing on optical recording media
Appareil pour lire et/ou enregistrer sur des supports d'enregistrement

(30) Priorität: 26.03.1996 DE 19611904
(43) Veröffentlichungstag der Anmeldung: 01.10.1997
(73) Patentinhaber: DEUTSCHE THOMSON-BRANDT GMBH, 78048 Villingen-Schwenningen (DE)
(72) Erfinder: Weisser, Fritz, 78112 St. Georgen (DE); Schroeder, Heinz-Jörg, 78052 Villingen-Schwenningen (DE); Uhde, Dietmar, 78126 Königfeld (DE)
(74) Vertreter: Kurth, Dieter, Dipl.-Ing.

(56) Entgegenhaltungen:
- US-A- 5 148 421
- US-A- 5 281 797

## Beschreibung

Die vorliegende Erfindung befaßt sich mit einem Gerät zum Lesen und/oder Beschreiben optischer Aufzeichnungsträger, welches ein in den Strahlengang einbringbares optisches Zusatzelement aufweist.

Ein derartiges Gerät ist beispielsweise aus der US-A-5,148,421 bekannt. Dieses Gerät ist dazu geeignet, optische Aufzeichnungsträger zu lesen bzw. zu beschreiben, deren Aufzeichnungsschicht mit Schutzschichten unterschiedlicher Dicke versehen ist. Zum Anpassen des Gerätes an die unterschiedlichen optischen Aufzeichnungsträger wird eine optische Platte in den Strahlengang des den optischen Aufzeichnungsträger abtastenden Lichtstrahls eingebracht. Dazu dient ein Verschiebemittel, welches auf ein Signal eines den Typ des optischen Aufzeichnungsträgers feststellenden Sensors hin die optische Platte einschiebt bzw. aus dem Strahlengang herausnimmt.

Als nachteilig an dem bekannten Gerät ist anzusehen, daß das Verschiebemittel in Abhängigkeit von dem vom Sensor abgegebenen Signal die optische Platte aktiv in den Strahlengang hinein bzw. aus diesem heraus bewegen muß. Dazu ist ein aktives elektrisches Bauteil, beispielsweise ein Elektromotor, erforderlich. Dieser benötigt einen entsprechenden Bauraum, elektrische Zuleitungen, die gegebenenfalls elastisch ausgelegt sein müssen, um auf relative Verschiebungen von Sensor und Verschiebemittel zueinander angepaßt zu sein, gegebenenfalls ist ein Getriebe und ein Transmissionsstrang erforderlich. Weiterhin produziert ein aktives elektrisches Bauteil Abwärme und konsumiert Energie. Aus Komfortgründen ist es erforderlich, daß ein schneller Wechsel zwischen der eingeschobenen und der herausgenommenen Position der optischen Platte möglich ist, was einen leistungsfähigen Antrieb bedingt. Da ein derartiger Wechsel im allgemeinen aber nur recht selten vorkommt, stellt das Verschiebemittel ein nur selten benötigtes Bauteil dar, welches aber dennoch einen großen Aufwand erfordert. Im allgemeinen wird angenommen, daß die auf das Gerät optimal geeignete Art optischer Aufzeichnungsträger verwendet wird und nur in Ausnahmefällen ein optischer Aufzeichnungsträger, der das Einfahren bzw. Herausfahren der optischen Platte erfordert.

Ein derartiges Gerät ist ebenfalls aus der nicht vorveröffentlichten EP-A2-0 720 158 bekannt, die gemäß Art. 54(3) für die Staaten DE, FR und GB zu beachten ist.

Aufgabe der vorliegenden Erfindung ist es, ein einfaches, kostengünstiges, kompaktes und dennoch zuverlässiges Gerät zum Lesen und/oder Beschreiben optischer Aufzeichnungsträger zu schaffen, welches ein in den Strahlengang einbringbares optisches Zusatzelement aufweist.

Gelöst wird diese Aufgabe durch die im Anspruch 1 angegebenen Maßnahmen. In den Unteransprüchen sind vorteilhafte Weiterbildungen der Erfindung angegeben, die sowohl einzeln als auch in Kombination miteinander vorteilhaft einsetzbar sind.

Erfindungsgemäß ist vorgesehen, daß das Verschiebemittel durch ein mechanisches Betätigungselement gebildet ist. Dies hat den Vorteil, daß das bzw. die Verschiebemittel einfach zu realisieren sind, und daß sie keinen großen Platzbedarf erfordern. Als passive Elemente können ein druckbelasteter oder ein zugbelasteter mechanischer Anschlag, aber auch andere, beispielsweise ein über magnetische Abstoßung oder Anziehung realisierter Anschlag, vorteilhaft Verwendung finden. Diese passiven Bauteile haben weiterhin den Vorteil, daß kein eigener Antrieb wie Elektromotor oder Magnetspulen erforderlich ist. Das erfindungsgemäße Gerät zum Lesen und/oder Beschreiben optischer Aufzeichnungsträger kann somit auf einfache Weise an optische Aufzeichnungsträger mit die Aufzeichnungsschicht bedeckenden Schutzschichten unterschiedlicher Dicke angepaßt werden. Das optische Zusatzelement kann aber auch aus anderen Gründen als der Dickenanpassung eingebracht werden. Allgemein dient es zum Anpassen von Gerät und optischem Aufzeichnungsträger aneinander im Hinblick auf die jeweiligen optischen Eigenschaften. Das Zusatzelement kann dabei z.B. eine planparallele Platte, eine Linse, ein Filter, ein holographisches Element oder ein anderes geeignetes optisches Element sein.

Wenn die Fokussiermittel zwischen zwei Endpositionen relativ zum optischen Aufzeichnungsträger verschiebbar angeordnet sind, so werden die Betätigungselemente vorteilhafterweise in diesen Endpositionen angeordnet. Da die Fokussiermittel im allgemeinen mittels eines Grobantriebs in radialer Richtung relativ zum optischen Aufzeichnungsträger bewegbar sind, ist es ohne größeren Aufwand möglich, die erfindungsgemäßen Betätigungselemente in deren Endpositionen anzuordnen. Auch bereits fertig konstruierte Geräte können so ohne größeren Aufwand mit den erfindungsgemäßen Betätigungselementen nachgerüstet werden und somit kostengünstig auf den Betrieb mit verschiedenartigen optischen Aufzeichnungsträgern umgestellt werden. Ein weiterer Vorteil dieser Ausgestaltung besteht darin, daß ein ohnehin vorhandener Grobantrieb des Geräts zusätzlich zum Verschieben des optischen Zusatzelements genutzt werden kann, ohne daß eine konstruktive Anpassung des Grobantriebmotors an dessen neue Aufgabe erforderlich wäre.

Erfindungsgemäß ist weiterhin vorgesehen, das optische Zusatzelement an einem Trägerelement anzuordnen, welches seinerseits Anschlagelemente aufweist. Ein Vorteil dieser Lösung besteht darin, daß die Anschlagelemente unabhängig vom optischen Zusatzelement ausgebildet und somit an die Gegebenheiten des Gerätes angepaßt sein können. Das Trägerelement dient weiterhin zur exakten Lagerung und Führung des optischen Zusatzelementes.

Das Trägerelement kann vorteilhafterweise linear verschiebbar gelagert sein, eine besonders unkomplizierte Ausgestaltung der vorliegenden Erfindung besteht aber darin, daß das Trägerelement drehbar gelagert ist. Das Trägerelement ist dabei an einer Drehachse befestigt und bildet einen um die Drehachse verschwenkbaren Hebelarm, an dem das optische Zusatzelement angeordnet ist. Vorteilhafterweise ist das optische Zusatzelement am äußeren Ende des Hebelarms angeordnet, was eine relativ große Verschiebung bei geringem Verschwenkwinkel ermöglicht. Die Anschlagelemente sind dabei ebenfalls so angeordnet, daß sie die Hebelwirkung optimal ausnutzen: Je nach der möglichen aufwendbaren Kraft können sie näher zu der Drehachse hin bzw. weiter von der Drehachse entfernt angeordnet sein. Eine besonders kompakte Ausgestaltung des Trägerelements wird erzielt, wenn Anschlagelement und optisches Zusatzelement auf der gleichen Seite der Drehachse angeordnet sind. Es ist aber ebenso möglich, das Anschlagelement auf der dem optischen Zusatzelement abgewandten Seite der Drehachse anzuordnen, wenn dies aus konstruktiven Gründen sinnvoll erscheint.

Nach einem weiteren Aspekt der vorliegenden Erfindung ist, vorgesehen, daß das Trägerelement Halteelemente zum Halten des optischen Zusatzelements in der eingeschobenen bzw. der herausgenommenen Stellung aufweist. Dies bietet den Vorteil, daß das optische Zusatzelement in der jeweiligen Position sicher fixiert ist, was die Betriebssicherheit erhöht, insbesondere bei möglichen Erschütterungen des Geräts oder von Teilen des Geräts. Hierbei ist vorgesehen, die Halteelemente z.B. mittels rastender Verbindungen an bzgl. der Verschiebungsbewegung des optischen Zusatzelements feststehenden Bauteilen zu befestigen.

Der Vorteil einer besonders guten Ausnutzung ohnehin im Gerät vorhandener Bauteile wird dadurch erzielt, daß die Halteelemente mit einem oder mehreren, dem Fokussiermittel zugeordneten Magneten zusammenwirken. Dieser Magnet ist vorteilhafterweise der zum Fokussieren oder zum Feinantrieb einer Objektivlinse vorhandene Dauermagnet, an den die mit Magneten versehenen bzw. aus einem magnetischen Metall bestehenden Halteelemente mit gleichmäßig großer Kraft gehalten werden. Ein Lösen der Halteelemente ist nur nach Überwinden einer Mindestkraft möglich, was ein ungewolltes Lösen, beispielsweise durch Erschütterungen, nahezu ausschließt. Der Magnet kann aber auch ein Elektromagnet sein, dessen Stärke zum Lösen der Halteelemente zurückgenommen werden kann.

Eine weitere erfindungsgemäße Lösung besteht darin, die Magnete ausschließlich am Halteelement anzuordnen und mit entsprechenden feststehenden Gegenspielen, magnetischen Metallen oder Elektromagneten, zusammenwirken zu lassen. Dies bietet den Vorteil, daß diese Magnete in ihrer Stärke auf die zu haltende Masse von Trägerelement und Zusatzelement angepaßt werden können. Eine Über- oder Unterdimensionierung der Haltekraft kann somit ohne bauliche Änderungen am Fokussiermittel vermieden werden.

Ein weiterer Aspekt der vorliegenden Erfindung besteht darin, daß Steuerungsmittel vorgesehen sind, die das Einbringen bzw. Herausnehmen des optischen Zusatzelementes in den Strahlengang hinein bzw. aus diesem heraus steuern. Besonders günstig ist es dabei, das optische Zusatzelement im Normalfall außerhalb des Strahlengangs zu belassen und nur dann einzubringen, wenn dies erforderlich ist, beispielsweise wenn ein entsprechender optischer Aufzeichnungsträger detektiert wird oder eine manuelle Angabe des Benutzers dies fordert. Dies kann dadurch sichergestellt werden, daß der Grobantrieb nach dem Anschalten bzw. vor dem Ausschalten in die entsprechende Position gefahren wird, sowie nach dem Einlegen eines neuen optischen Aufzeichnungsträgers. Eine derartige automatische Einstellung einer Standardposition kann vorteilhafterweise immer dann durchgeführt werden, wenn ohnehin eine Pause des Auslese- bzw. Schreibbetriebs vorliegt, so daß der Nutzer keinen Zeitverlust bemerkt. Zudem kann eine relativ oft durchgeführte Kontrolle der Einstellung gegebenenfalls Halteelemente überflüssig machen bzw. deren erforderliche Haltestärke begrenzen.

Es versteht sich, daß die einzelnen angegebenen Maßnahmen auch in Kombination miteinander vorteilhafte Ausgestaltungen der Erfindung darstellen. Dabei ist der erfinderische Gedanke nicht auf die genannten Ausführungsbeispiele beschränkt, sondern erstreckt sich ebenfalls auf einfache, dem Fachmann geläufige Weiterbildungen der beschriebenen Erfindungen. Weitere Vorteile sind in dem nachfolgenden Ausführungsbeispiel beschrieben. Dabei zeigen:
- Fig. 1: eine räumliche Ansicht eines erfindungsgemäßen Gerätes mit Antriebseinheit und Auslese-/Schreibeinheit
- Fig. 2: eine schematische räumliche Ansicht einer Auslese-/Schreibeinheit eines erfindungsgemäßen Gerätes
- Fig. 3: eine Explosionsdarstellung der Fokussiermittel mit erfindungsgemäßem Verschiebemittel für ein optisches Zusatzelement

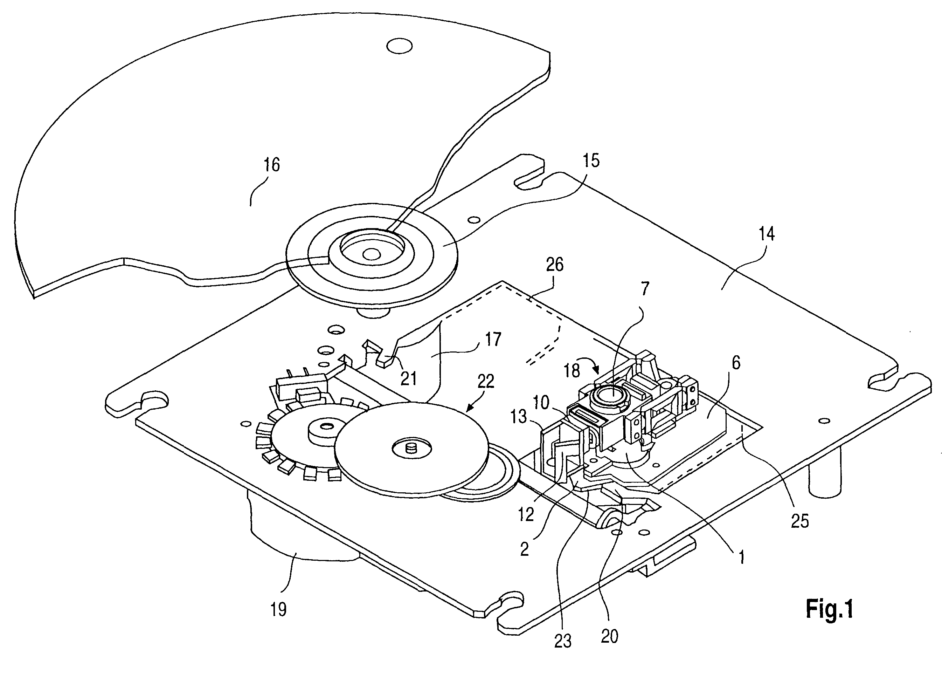

Fig. 1 zeigt eine räumliche Ansicht eines erfindungsgemäßen Gerätes. An einer Platine 14 ist ein Plattenteller 15 angeordnet, der zur Aufnahme eines hier nur teilweise abgebildeten optischen Aufzeichnungsträgers 16 dient. Der Plattenteller 15 wird von einer Antriebseinheit 17 angetrieben. Fokussiermittel 18 sind linear verschiebbar bezüglich der Platine 14 angebracht, eine lineare Verschiebung der Fokussiermittel 18 entspricht einer Radialbewegung bezüglich des optischen Aufzeichnungsträgers 16. Zum Antrieb der Fokussiermittel 18 dient ein Grobantriebsmotor 19. Zur Kraftübertragung auf die Fokussiermittel 18 ist ein Getriebe 22 vorgesehen, welches Zahnräder und Zahn- bzw. Gewindestangen aufweist.

Die Fokussiermittel 18 weisen eine Aktuatorplatte 6 auf, an der unter anderem eine Objektivlinse 7 und ein optisches Zusatzelement 1 angeordnet sind. Das optische Zusatzelement 1 ist über ein als Hebel ausgebildetes Trägerelement 2 verschwenkbar gelagert. Dargestellt ist die aus dem Strahlengang herausgenommene Position des optischen Zusatzelements 1. Zum Verschieben des optischen Zusatzelements 1 in die andere, in den Strahlengang eingebrachte Position, dient die Anschlagkante 23 des Trägerelements 2, welche mit einer als Betätigungselement wirkenden Nase 20 der Platine 14 zusammenwirkt, wenn das Fokussiermittel 18 über die in Fig. 1 dargestellte Position hinaus in seine bezüglich des optischen Aufzeichnungsträgers 16 radial äußerste, gestrichelt angedeutete Endposition 25 verschoben wird. Dabei verkippt das Trägerelement 2 derart um seine Drehachse, daß das optische Zusatzelement 1 sich im Strahlengang befindet.

Wird die Aktuatorplatte 6 in ihre bezüglich des optischen Aufzeichnungsträgers 16 radial innere Endposition 26, die hier ebenfalls gestrichelt angedeutet ist, verschoben, so wirkt eine hier nicht dargestellte Anschlagkante 24 des Trägerelements 2 mit der Nase 21 der Platine 14 zusammen, um das optische Zusatzelement 1 aus dem Strahlengang zu verschieben. Die Endpositionen 25 und 26 liegen dabei außerhalb bzw. innerhalb der radial äußeren bzw. radial inneren zum Auslesen der auf dem optischen Aufzeichnungsträger 16 vorhandenen Informationen geeigneten End- bzw. Anfangspositionen. Die Endpositionen 25 und 26 werden daher nur zum Verschwenken des optischen Zusatzelements 1 in den Strahlengang hinein bzw. aus diesem heraus angefahren. Zum Fixieren des optischen Zusatzelements 1 in seiner jeweiligen Soll-Position sind als Laschen 12 bzw. 13 ausgebildete Halteelemente am Trägerelement 2 angeordnet, die mit einem Magneten 10 zusammenwirken.

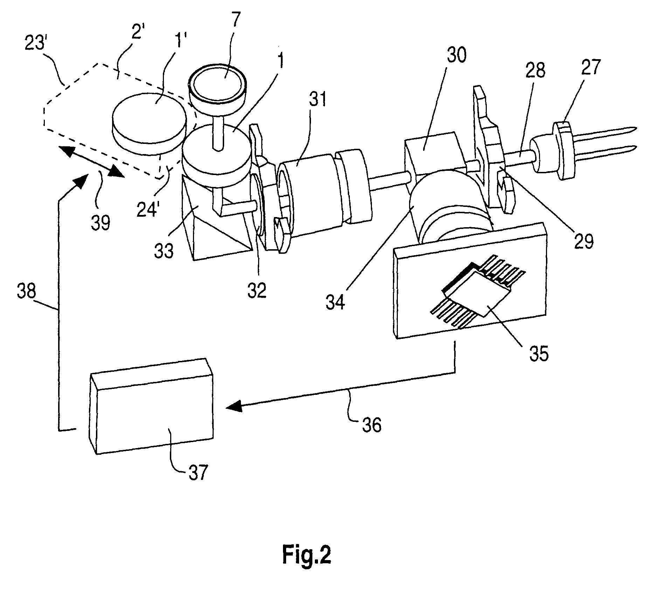

Fig. 2 zeigt eine schematische räumliche Ansicht einer Auslese-/Schreibeinheit eines erfindungsgemäßen Gerätes. Als Lichtquelle dient eine Laserdiode 27, die einen Laserstrahl 28 erzeugt. Dieser durchläuft ein optisches Gitter 29, einen Strahlteiler 30, eine Kolimatorlinse 31 und eine Viertelwellenlängen- oder λ/4-Platte 32, wird von einem Spiegel 33 umgelenkt und durchläuft das optische Zusatzelement 1 sowie die Objektivlinse 7, welche ihn auf die Informationsschicht des optischen Aufzeichnungsträgers 16 fokussiert. Von dort wird der Laserstrahl 28 zurückreflektiert und durchläuft die genannten Bauteile in umgekehrter Richtung, bis er vom Strahlteiler 30 umgelenkt wird und nach Durchlaufen einer optischen Anordnung 34 auf den Detektor 35 fällt. Dieser besteht in bekannter Weise aus mehreren Detektorfeldern, deren Ausgangssignale 36 direkt oder bereits vorverarbeitet, z.B. verstärkt, an eine Steuerungseinheit 37 geleitet werden. Diese gibt neben anderen Steuerungssignalen auch Steuerungssignale 38 zum Verschieben des optischen Zusatzelements 1, welches im Ausführungsbeispiel eine Linse ist, ab. Strichpunktiert ist das optische Zusatzelement 1' in seiner aus dem optischen Strahlengang herausgenommenen Position dargestellt. Als Alternative zu dem in Fig. 1 als Hebel ausgebildeten Trägerelement 2 ist hier gestrichelt ein in Richtung des Pfeils 39 linear verschiebbares Trägerelement 2' abgebildet. Auch dieses weist Anschlagkanten 23', 24' auf, die mit entsprechenden, hier nicht dargestellten Betätigungselementen der Platine zum Einschieben bzw. Herausnehmen des optischen Zusatzelements 1 in den Strahlengang hinein bzw. aus diesem heraus dienen.

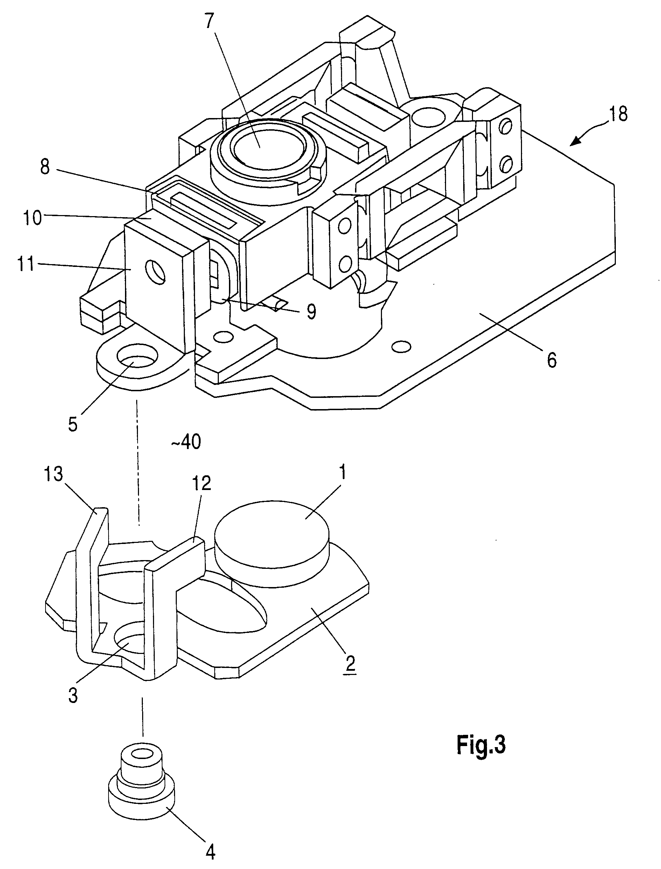

Fig. 3 zeigt eine Explosionsdarstellung der Fokussiermittel 18. Das optische Zusatzelement 1 ist an dem als Hebel ausgebildeten Trägerelement 2 befestigt, welches eine Bohrung 3 aufweist, auf der eine Buchse 4 gelagert ist. Die Buchse 4 wird mit dem Trägerelement 2 in einer Bohrung 5 der Aktuatorplatte 6 befestigt. Besonders kostengünstig läßt sich diese Verbindung als Nietverbindung ausführen. Auf der Aktuatorplatte 6 befindet sich die Objektivlinse 7, welche über eine Fokusspule 8, eine als Feinantrieb dienende Spurführungsspule 9 und den Magneten 10 mit seinen Rückschlußblechen 11 gesteuert wird. Am Trägerelement 2 sind zwei Laschen 12, 13 vorgesehen, die die Halteelemente bilden und die in der jeweiligen Anschlagposition am Magneten 10 das Trägerelement 2 sicher in der jeweiligen Position fixieren. Um das Trägerelement 2 in die jeweilige andere Position zu verschieben, muß zunächst die Haltekraft zwischen der Lasche 12 bzw. 13 und dem Magneten 10 überwunden werden.

Um digitale Videosignale auf optischen Aufzeichnungsträgern speichern zu können, wurde der Audio-CD-Standard zum DVD-Standard (Digitale Video Disk) weiterentwickelt. Im Gegensatz zur herkömmlichen CD, bei der sich die Informationsträgerschicht im Abstand der Plattendicke von 1,2 mm von der Oberfläche befindet, liegt diese bei der DVD im Abstand von 0,6 mm von der Oberfläche. Auf diese Weise sind doppelseitig bespielbare optische Aufzeichnungsträger möglich. In einem DVD-Abspielgerät soll neben der DVD auch die normale CD abgespielt werden können. Eine Schwierigkeit besteht nun darin, den Laserstrahl 28 auf die um 0,6 mm versetzte Informationsträgerschicht zu fokussieren. Es ist daher vorgesehen, zum Abspielen einer CD ein optisches Zusatzelement 1, im Ausführungsbeispiel eine Linse, in den Strahlengang einzubringen, um die auf Aufzeichnungsträger im DVD-Format angepaßte Optik der Auslese-/Schreibeinheit auf die geänderte Schichtdicke und Aufzeichnungskapazität der CD anzupassen. In Fig. 1 ist das optische Zusatzelement 1 ausgeschwenkt, das Gerät ist für einen optischen Aufzeichnungsträger 16 im DVD-Format spiel- bzw. aufzeichnungsbereit. Wird nun ein optischer Aufzeichnungsträger im CD-Format eingelegt, kann der Laserstrahl 28 nicht auf die Informationsträgerschicht fokussiert werden. Die Fokussierungsmittel 18 fahren in diesem Fall über die äußerste, zum Auslesen bzw. Aufzeichnen geeignete Stellung, die in Fig. 1 dargestellt ist, hinaus in die Endposition 25. Über die Nase 20 der Platine 14 wird das optische Zusatzelement 1 eingeschwenkt. Nach dem Abspielen der CD, nach dem Herausnehmen der CD aus dem Gerät oder zu anderen geeigneten Zeitpunkten fahren die Fokussiermittel 18 über die innerste zum Auslesen bzw. Aufzeichnen geeignete Position hinaus in die radial innere Endposition 26, wobei die Nase 21 an der Anschlagkante 24 des Trägerelements 2 anschlägt, dieses um dessen Drehachse 40 verkippt und somit das optische Zusatzelement 1 aus dem Strahlengang ausschwenkt.

Erfindungsgemäß wird ein einfaches, kostengünstiges und dennoch zuverlässiges Gerät zum Lesen und/oder Beschreiben optischer Aufzeichnungsträger 16 vorgeschlagen, welches ein in den Strahlengang einbringbares bzw. aus diesem herausnehmbares optisches Zusatzelement 1 aufweist. Dazu sind mechanische Anschlagelemente 20 bzw. 21, die mit entsprechenden Anschlagkanten 23 bzw. 24 eines das optische Zusatzelement 1 tragenden Trägerelements 2 zusammenwirken, vorgesehen. Das Anwendungsgebiet der Erfindung umfaßt Geräte, die zum Lesen und/oder Beschreiben optischer Aufzeichnungsträger unterschiedlichen Aufbaus geeignet sind, wie digitale Video-Disks (DVD) und herkömmliche Audio-CDs (CD).

## Patentansprüche (Patentansprüche für folgende(n) Vertragsstaat(en): IT)

1. Gerät zum Lesen oder Beschreiben optischer Aufzeichnungsträger (16),
mit einer Lichtquelle (27) zum Erzeugen eines Strahls (28) zum Auslesen oder Beschreiben des optischen Aufzeichnungsträgers (16),
mit Fokussiermitteln (18) zum Fokussieren des Strahls (28) auf eine Aufzeichnungsschicht des optischen Aufzeichnungsträgers (16),
mit einem mittels eines Trägerelements (2) in den Strahlengang einbringbaren optischen Zusatzelement (1) und
mit einem Verschiebemittel zum Einbringen bzw. Herausnehmen des optischen Zusatzelements (1) in den bzw. aus dem Strahlengang,
wobei die Fokussiermittel (18) relativ zum Aufzeichnungsträger (16) zwischen zwei Endpositionen (25,26) verschiebbar angeordnet sind
**dadurch gekennzeichnet,**
**daß** das Verschiebemittel durch mechanische Betätigungselemente (20, 21) gebildet ist, die in den Endpositionen (25,26) angeordnet sind,
**daß** das Trägerelement (2) in der jeweiligen Endposition (25,26) mit dem jeweiligen Betätigungselement (20,21) zusammenwirkt um das Zusatzelement (1) in den Strahlengang einzubringen bzw. aus diesem herauszunehmen, und
**daß** die Endpositionen (25,26) außerhalb des zum Auslesen oder Beschreiben des optischen Aufzeichnungsträgers (16) vorgesehenen Bereichs angeordnet sind.

2. Gerät nach Anspruch 1, **dadurch gekennzeichnet, daß** das optische Zusatzelement (1) an einem Trägerelement (2,2') angeordnet ist, welches Anschlagelemente (23,24,23',24') aufweist.

3. Gerät nach Anspruch 2, **dadurch gekennzeichnet, daß** das Trägerelement (2) drehbar gelagert ist.

4. Gerät nach Anspruch 1, **dadurch gekennzeichnet, daß** das Trägerelement (2) Halteelemente (12, 13) zum Halten des optischen Zusatzelements (1) in der eingeschobenen bzw. herausgenommenen Stellung aufweist.

5. Gerät nach Anspruch 4, **dadurch gekennzeichnet, daß** die Halteelemente (12, 13) mit einem oder mehreren, den Fokussiermitteln (18) zugeordneten Magneten (10) zusammenwirken.

6. Gerät nach Anspruch 1, **dadurch gekennzeichnet, daß** Steuerungsmittel (37) vorgesehen sind, die das Einbringen/Herausnehmen des optischen Zusatzelements (1) in den bzw. aus dem Strahlengang steuern.

7. Gerät nach Anspruch 6, **dadurch gekennzeichnet, daß** das Steuerungsmittel (37) das Fokussiermittel (18) dazu veranlaßt, nach dem Anschalten oder vor dem Ausschalten des Geräts oder nach dem Einlegen eines neuen Aufzeichnungsträgers (16) in eine vorgegebene Position (25,26) zu fahren.

## Patentansprüche (Patentansprüche für folgende(n) Vertragsstaat(en): DE, FR, GB)

1. Gerät zum Lesen oder Beschreiben optischer Aufzeichnungsträger (16),
mit einer Lichtquelle (27) zum Erzeugen eines Strahls (28) zum Auslesen oder Beschreiben des optischen Aufzeichnungsträgers (16),
mit Fokussiermitteln (18) zum Fokussieren des Strahls (28) auf eine Aufzeichnungsschicht des optischen Aufzeichnungsträgers (16),
mit einem mittels eines Trägerelements (2) in den Strahlengang einbringbaren optischen Zusatzelement (1) und
mit einem Verschiebemittel zum Einbringen bzw. Herausnehmen des optischen Zusatzelements (1) in den bzw. aus dem Strahlengang,
wobei die Fokussiermittel (18) relativ zum Aufzeichnungsträger (16) zwischen zwei Endpositionen (25,26) verschiebbar angeordnet sind,
**wobei**
das Verschiebemittel durch mechanische Betätigungselemente (20, 21) gebildet ist, die in den Endpositionen (25,26) angeordnet sind,
das Trägerelement (2) in der jeweiligen Endposition (25,26) mit dem jeweiligen Betätigungselement (20,21) zusammenwirkt um das Zusatzelement (1) in den Strahlengang einzubringen bzw. aus diesem herauszunehmen,
die Endpositionen (25,26) außerhalb des zum Auslesen oder Beschreiben des optischen Aufzeichnungsträgers (16) vorgesehenen Bereichs angeordnet sind, und das Trägerelement (2) Halteelemente (12, 13) zum Halten des optischen Zusatzelements (1) in der eingeschobenen bzw. herausgenommenen Stellung aufweist, die mit einem oder mehreren, den Fokussiermitteln (18) zugeordneten Magneten (10) zusammenwirken.

2. Gerät nach Anspruch 1, **dadurch gekennzeichnet, daß** das optische Zusatzelement (1) an einem Trägerelement (2,2') angeordnet ist, welches Anschlagelemente (23,24,23',24') aufweist.

3. Gerät nach Anspruch 2, **dadurch gekennzeichnet, daß** das Trägerelement (2) drehbar gelagert ist.

4. Gerät nach Anspruch 1, **dadurch gekennzeichnet, daß** Steuerungsmittel (37) vorgesehen sind, die das Einbringen/Herausnehmen des optischen Zusatzelements (1) in den bzw. aus dem Strahlengang steuern.

5. Gerät nach Anspruch 4, **dadurch gekennzeichnet, daß** das Steuerungsmittel (37) das Fokussiermittel (18) dazu veranlaßt, nach dem Anschalten oder vor dem Ausschalten des Geräts oder nach dem Einlegen eines neuen Aufzeichnungsträgers (16) in eine vorgegebene Position (25,26) zu fahren.

## Claims (Claims for the following Contracting State(s): IT)

1. Device for reading from or writing to optical recording media (16),
having a light source (27) for producing a beam (28) for reading out or writing to the optical recording medium (16),
having focusing means (18) for focusing the beam (28) onto a recording layer of the optical recording medium (16),
having an additional optical element (1), which can be introduced into the beam path using a carrier element (2), and
having a displacement means for introducing or removing the additional optical element (1) into or from the beam path,
whereby the focusing means (18) can be displaced relative to the optical recording medium (16) between two end positions (25, 26),
**characterized in that**
the displacement means is formed by mechanical actuating elements (20, 21) which are arranged in the end positions (25, 26),
**in that** the carrier element (2) in the respective end position (25, 26) interacts with the respective actuating element (20, 21) for introducing the additional optical element (1) into the beam path resp. for removing it from the beam path, and
**in that** the end positions (25, 26) are arranged outside the region provided for reading out or writing to the optical recording medium (16).

2. Device according to Claim 1, **characterized in that** the additional optical element (1) is arranged on a carrier element (2, 2'), which has stop elements (23, 24, 23', 24').

3. Device according to Claim 2, **characterized in that** the carrier element (2) is mounted such that it is rotatable.

4. Device according to Claim 1, **characterized in that** the carrier element (2) has holding elements (12, 13) for holding the additional optical element (1) in the introduced or removed position.

5. Device according to Claim 4, **characterized in that** the holding elements (12, 13) interact with one or more magnets (10) assigned to the focusing means (18).

6. Device according to Claim 1, **characterized in that** control means (37) are provided which control the introduction/removal of the additional optical element (1) into or from the beam path.

7. Device according to Claim 6, **characterized in that** the control means (37) prompts the focusing means (18), after the switching on or before the switching off of the device or after the insertion of a new recording medium (16), to move into a predetermined position (25, 26).

## Claims (Claims for the following Contracting State(s): DE, FR, GB)

1. Device for reading from or writing to optical recording media (16),
having a light source (27) for producing a beam (28) for reading out or writing to the optical recording medium (16),
having focusing means (18) for focusing the beam (28) onto a recording layer of the optical recording medium (16),
having an additional optical element (1), which can be introduced into the beam path using a carrier element (2), and
having a displacement means for introducing or removing the additional optical element (1) into or from the beam path,
whereby the focusing means (18) can be displaced relative to the optical recording medium (16) between two end positions (25, 26),
**whereby**
the displacement means is formed by mechanical actuating elements (20, 21) which are arranged in the end positions (25, 26),
the carrier element (2) in the respective end position (25, 26) interacts with the respective actuating element (20, 21) for introducing the additional optical element (1) into the beam path resp. for removing it from the beam path,
the end positions (25, 26) are arranged outside the region provided for reading out or writing to the optical recording medium (16), and
the carrier element (2) has holding elements (12, 13) for holding the additional optical element (1) in the introduced or removed position, which interact with one or more magnets (10) assigned to the focusing means (18).

2. Device according to Claim 1, **characterized in that** the additional optical element (1) is arranged on a carrier element (2, 2'), which has stop elements (23, 24, 23', 24').

3. Device according to Claim 2, **characterized in that** the carrier element (2) is mounted such that it is rotatable.

4. Device according to Claim 1, **characterized in that** control means (37) are provided which control the introduction/removal of the additional optical element (1) into or from the beam path.

5. Device according to Claim 4, **characterized in that** the control means (37) prompts the focusing means (18), after the switching on or before the switching off of the device or after the insertion of a new recording medium (16), to move into a predetermined position (25, 26).

## Revendications (Revendications pour l'(les) Etat(s) contractant(s) suivant(s): IT)

1. Appareil pour lire ou écrire sur des supports d'enregistrement optiques (16),
doté d'une source de lumière (27) pour la génération d'un faisceau (28) en vue de la lecture ou de l'écriture sur le support d'enregistrement optique (16),
doté de dispositifs de focalisation (18) pour la focalisation du faisceau (28) sur une couche d'enregistrement du support d'enregistrement optique (16),
doté d'un élément complémentaire optique (1) qui peut être introduit dans le parcours optique au moyen d'un élément de support (2),
doté d'un dispositif de déplacement qui permet d'introduire l'élément complémentaire optique (1) dans le parcours optique ou de l'en retirer,
où les dispositifs de focalisation (18) peuvent être déplacés entre deux positions finales (25, 26) par rapport au support d'enregistrement (16),
**caractérisé en ce que**
le dispositif de déplacement est constitué d'éléments de commande mécaniques (20, 21) placés dans les positions finales (25, 26), **en ce que** l'élément de support (2) fonctionne avec chaque élément de commande (20, 21) dans chaque position finale (25, 26) pour introduire l'élément complémentaire (1) dans le parcours optique ou pour l'en retirer et **en ce que** les positions finales (25, 26) sont placées en dehors de la zone prévue pour la lecture ou l'écriture sur le support d'enregistrement optique (16).

2. Appareil selon la revendication 1, **caractérisé en ce que** l'élément complémentaire optique (1) est placé sur un élément de support (2, 2') qui présente des éléments de butée (23, 24, 23', 24').

3. Appareil selon la revendication 2, **caractérisé en ce que** l'élément de support (2) est orientable.

4. Appareil selon la revendication 1, **caractérisé en ce que** l'élément de support (2) comporte des éléments de maintien (12, 13) pour le maintien de l'élément complémentaire optique (1) en position d'insertion ou de retrait.

5. Appareil selon la revendication 4, **caractérisé en ce que** les éléments de maintien (12, 13) fonctionnent avec un ou plusieurs aimants (10) placés sur les dispositifs de focalisation (18).

6. Appareil selon la revendication 1, **caractérisé en ce que** des dispositifs de commande (37) qui commandent l'introduction de l'élément complémentaire optique (1) dans le parcours optique ou son retrait de ce dernier sont prévus.

7. Appareil selon la revendication 6, **caractérisé en ce que** les dispositifs de commande (37) permettent d'amener les dispositifs de focalisation (18) dans une position prédéterminée (25, 26) après la connexion ou avant la déconnexion de l'appareil ou encore après la mise en place d'un nouveau support d'enregistrement (16).

## Revendications (Revendications pour l'(les) Etat(s) contractant(s) suivant(s): DE, FR, GB)

1. Appareil pour lire ou écrire sur des supports d'enregistrement optiques (16),
doté d'une source de lumière (27) pour la génération d'un faisceau (28) en vue de la lecture ou de l'écriture sur le support d'enregistrement optique (16),
doté de dispositifs de focalisation (18) pour la focalisation du faisceau (28) sur une couche d'enregistrement du support d'enregistrement optique (16),
doté d'un élément complémentaire optique (1) qui peut être introduit dans le parcours optique au moyen d'un élément de support (2),
doté d'un dispositif de déplacement qui permet d'introduire l'élément complémentaire optique (1) dans le parcours optique ou de l'en retirer,
où les dispositifs de focalisation (18) peuvent être déplacés entre deux positions finales (25, 26) par rapport au support d'enregistrement (16)
**dans lequel**
le dispositif de déplacement est constitué d'éléments de commande mécaniques (20, 21) placés dans les positions finales (25, 26), l'élément de support (2) fonctionne avec chaque élément de commande (20, 21) dans chaque position finale (25, 26) pour introduire l'élément complémentaire (1) dans le parcours optique ou pour l'en retirer,
les positions finales (25, 26) sont placées en dehors de la zone prévue pour la lecture ou l'écriture sur le support d'enregistrement optique (16) et l'élément de support (2) comporte des éléments de maintien (12, 13) pour le maintien de l'élément complémentaire optique (1) en position d'insertion ou de retrait, qui fonctionnent avec un ou plusieurs aimants placés sur les éléments de focalisation (18).

2. Appareil selon la revendication 1, **caractérisé en ce que** l'élément complémentaire optique (1) est placé sur un élément de support (2, 2') qui présente des éléments de butée (23, 24, 23', 24').

3. Appareil selon la revendication 2, **caractérisé en ce que** l'élément de support (2) est orientable.

4. Appareil selon la revendication 1, **caractérisé en ce que** des dispositifs de commande (37) qui commandent l'introduction de l'élément complémentaire optique (1) dans le parcours optique ou son retrait de ce dernier sont prévus.

5. Appareil selon la revendication 4, **caractérisé en ce que** les dispositifs de commande (37) permettent d'amener les dispositifs de focalisation (18) dans une position prédéterminée (25, 26) après la connexion ou avant la déconnexion de l'appareil ou encore après la mise en place d'un nouveau support d'enregistrement (16).
